# EUROPEAN PATENT SPECIFICATION

(11) **EP 3 196 403 B1**
(45) Date of publication and mention of the grant of the patent: **24.07.2019**
(21) Application number: 16152020.0
(22) Date of filing: 20.01.2016
(51) Int. Cl.: E21B 27/04, E21B 7/00, E21B 7/02, E21D 11/10, E21D 20/02, B28C 7/06

(54) **FEED APPARATUS AND METHOD FOR FEEDING CEMENT TO A CEMENT SILO**
ZUFÜHRUNGSVORRICHTUNG UND VERFAHREN ZUM ZUFÜHREN VON ZEMENT IN EIN ZEMENTSILO
APPAREIL D'ALIMENTATION ET PROCÉDÉ POUR INTRODUIRE DU CIMENT DANS UN SILO À CIMENT

(43) Date of publication of application: 26.07.2017
(73) Proprietor: Sandvik Mining and Construction Oy, 33330 Tampere (FI)
(72) Inventor: SIMILÄ, Jukka, 33330 Tampere (FI); YLI-HANNUKSELA, Tero, 33330 Tampere (FI); JÄRVENTAUSTA, Sami, 33330 Tampere (FI)
(74) Representative: Sandvik

(56) References cited:
- WO-A1-2008/053081
- CN-Y- 2 506 598
- SE-B- 370 750
- US-A- 5 785 420

## Description

### BACKGROUND

The invention relates to a feed apparatus and a method for feeding cement to a cement silo, more particularly to feeding cement to a cement silo attached to a mining machine.

In mining there are used grouting apparatuses both for grouting bolts in holes drilled for them and for injecting cement in holes or various fragmented rocks. Cement is usually fed from a lower part of a cement silo to a mixer, in which mixer the cement is mixed with water to produce grouting concrete. Typically, the cement silo is located on top of the mining machine, where it is relatively high up, whereby charging cement into the feed silo is hard, complicated and produces dust. Additionally, it often requires manual assistance especially in underground mines with limited space available requiring a separate working platform usually reached by a ladder and may even concern cement sacks being lifted by manpower, which all may further risk the occupational safety of the operators.

WO 2008/053081 discloses a cement silo structure for a mining machine comprising a mixer, a cement silo for cement and a feed apparatus for feeding cement to the mixer, wherein the cement silo may be transferred between a use position on top of the mining machine and a filling position that differs from the use position. CN 2506598 discloses a separation type spiral sand conveyer, pertaining to the field of oil well fracturing construction device, wherein the sand conveyer adopts two sand conveyer shells and a screw conveyor to realize sand feeding of two sand carriers simultaneously and continuously to provide continuous sand feeding of fracturing trucks in construction. SE 370750 discloses a scoop-arrangement for providing dry matter to a mixer for concreting in limited spaces of mining tunnels. US 5785420 discloses a portable metering and mixing apparatus including a trailer having a hopper thereon divided into two compartments, namely one compartment for sand material and another compartment for cementitious material.

### BRIEF DESCRIPTION

Embodiments according to the invention are set out in the independent claims with further alternative embodiments as set out in the dependent claims.

The solution is based on the idea of providing the feed apparatus with a receptacle, a transfer tube and transfer means arranged to move cement within the transfer tube from the receptacle to the cement silo. This enables selecting more freely the point at which the cement is fed to the mining machine. This is very beneficial, because the space in mining tunnels is typically very limited and because of the problems related to feeding the cement directly to the cement silo typically positioned on top of the mining machine can be avoided.

Some other advantages of the solution are discussed in connection with the detailed description.

### BRIEF DESCRIPTION OF THE DRAWINGS

In the following the invention will be described in greater detail by means of preferred embodiments with reference to the attached [accompanying] drawings, in which
Figure 1 shows a mining machine comprising a feed apparatus for feeding cement to a cement silo with the feed apparatus in a tramming position;
Figure 2 shows a mining machine comprising a feed apparatus for feeding cement to a cement silo with the feed apparatus in a use position;
Figure 3 illustrates a method for supplying cement to a cement silo attached to a mining machine; and
Figures 4a and 4b illustrate schematically embodiments of a feed apparatus for a mining machine.

### DETAILED DESCRIPTION OF THE INVENTION

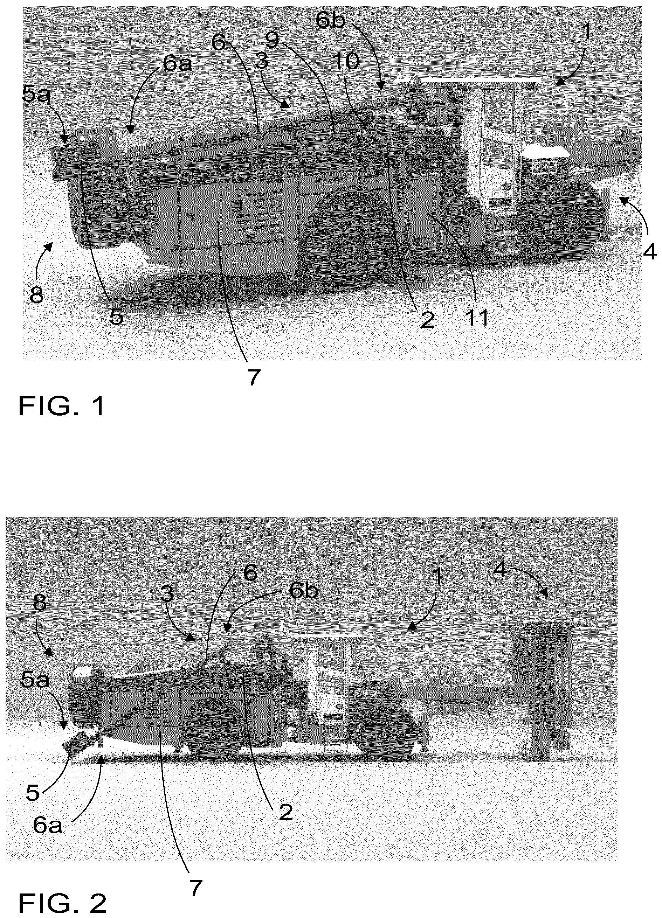

Figure 1 shows a mining machine 1. The mining machine 1 may comprise any mining machine comprising means for providing grouting concrete to holes, splits and/or other cavities of a rock. Different embodiments such mining machines 1 and means 4 for providing grouting concrete in cavities provided in a rock are known as such. The mining machine 1 may also comprise a mixer 11 for mixing cement and water for producing the grouting concrete and a cement silo 2 through which the cement is fed to the mixer 11.

The mining machine 1 of Figure 1 also comprises a feed apparatus 3 for feeding cement to the cement silo 2 of the mining machine 1. The feed apparatus 3 may comprise a receptacle 5 for receiving cement. According to an embodiment, the receptacle 5 may comprise a scoop-like container, wherein an opening 5a is arranged at the top of the receptacle 5 for receiving cement. This enables easy filling of the cement to the receptacle 5.

The feed apparatus 3 may further comprise a transfer tube 6 connected at a first end 6a to the receptacle 5 and connectable at a second end 6b to the cement silo 2 for guiding the cement from the receptacle 5 to the cement silo 2. The transfer tube 6 may be fixedly or removably attached to the receptacle 5 and/or the cement silo 2 for feeding cement to the cement silo 2. The transfer tube 6 may comprise at least one transfer tube section comprising a tube-like inner space for cement to be transferred. The transfer tube 6 enables positioning of the receptacle 5 for receiving cement at a desired position and, therefore, possibility for a more safe and convenient feeding of cement, as the cement does not need to be fed directly to the cement silo 2 or a receptacle provided above the cement silo 2.

According to an embodiment, the transfer tube 6 may comprise a transfer tube section and a connector part 6c for connecting the transfer tube 6 to the cement silo 2. According to another embodiment, the transfer tube 6 may further comprise a second transfer tube section. According to an embodiment, the transfer tube 6 may comprise at least two transfer tube sections arranged at an angle with respect to one another. These features enable more possible configurations and better fitting of the feed apparatus 3 with respect to the cement silo 2 and the frame part 7 of the mining machine 1.

According to an embodiment, at least a part of a transfer tube section of the transfer tube 6 may be formed as flexible at least in the transverse direction of the transfer tube section. The transverse direction of the transfer tube section may comprise a direction substantially perpendicular to the longitudinal direction of the transfer tube section. According to an embodiment, the at least part of the transfer tube section may be forms as flexible by the transfer tube section comprising a flexible material and/or a flexible structure.

According to an embodiment, the receptacle 5 may be provided as a fixed part of the feed apparatus 3. According to another embodiment, the receptacle 5 may comprise a separate unit that is removably arrangeable to the transfer tube 6. Different types of arrangements for removably arranging a receptacle to other structural parts are known as such and are not described here in more detail. In such embodiment, the receptacle 5 may be formed to be lifted to its use position by a fork-lift or other lifting apparatus known per se. Different types of lifting structures, such as lifting holes, lifting fixtures, lifting lugs, lifting hooks and the like are well known and are not described here in more detail.

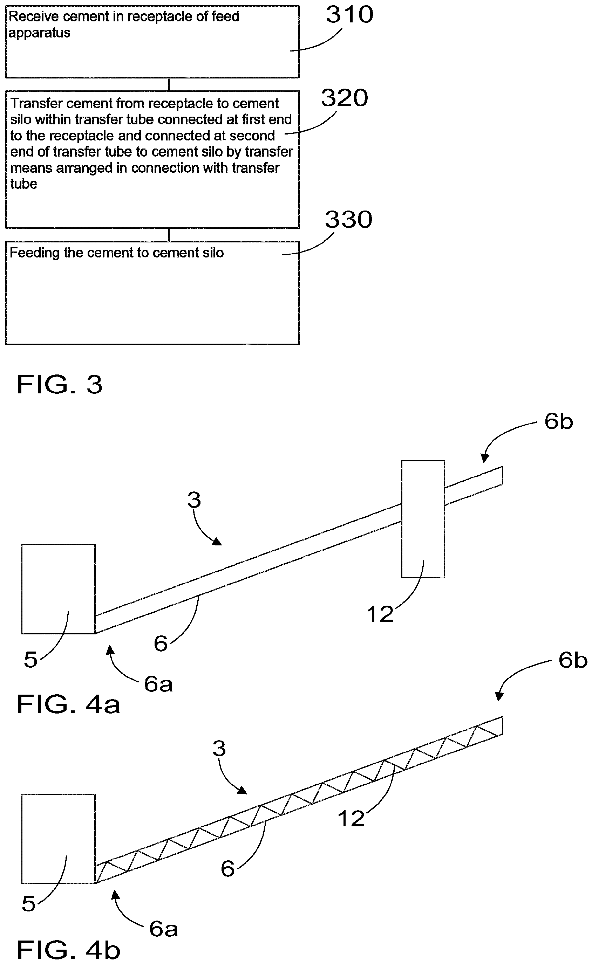

The feed apparatus 3 may further comprise transfer means 12 arranged in connection with the transfer tube 6 and arranged to move cement within the transfer tube 6 from the receptacle 5 to the cement silo 2. The transfer means 12 may, thus, be arranged at least partly within the transfer tube 6 and/or at least partly surrounding at least one end of the transfer tube 6 or a point along the length of the transfer tube 6. According to an embodiment, the transfer means 12 may comprise a screw conveyor, such as it is schematically shown if Figure 4b. In such an embodiment, the transfer means 12 may, thus, be arranged within the transfer tube 6. One benefit of such an embodiment is that it is cost efficient to provide. According to another embodiment, the transfer means 12 may comprise an ejector, such as is schematically shown in Figure 4a. In such an embodiment, the transfer means 12 may, thus, be arranged at least partly surrounding a point along the length of the transfer tube 6 and in fluid connection with it. Ejectors refer to pneumatic conveyors where overpressure and/or underpressure is used to provide a force moving a material. In such an embodiment, for instance overpressure may be provided at the first end 6a and/or underpressure may be provided at the second end 6b, such that the pressure difference between the first end 6a and the second end 6b of the transfer tube 6 pushes or pulls the cement within the transfer tube 6 from the receptacle 5 to the cement silo 2. Ejectors and pneumatic conveyors as well as ways of providing overpressure and/or underpressure in connection with ejectors and pneumatic conveyors are known as such. The overpressure may be provided by some type of a blower and/or the underpressure may be provided by a suction compressor, for example. A benefit of such an embodiment is that it works well also with transfer tubes 6 that are not straight as shown in the figures but comprise tube sections arranged at an angle with respect to one another or comprise bends of some other type. According to a further embodiment, the transfer means may comprise any other apparatus and/or structure known per se and suitable for transferring cement inside a transfer tube also in an upwards inclined direction. These features further enhance the possibilities to position the feed apparatus 3 and especially the receptacle 5 for receiving the cement with respect to the mining machine 1, because the cement does not need to be fed to the cement silo 2 from above the cement silo 2, but the transfer means may convey the cement also in an upward or sideways direction. The feeding of the cement can, thus, be enabled in a more safe and convenient manner and also in more narrow and/or low mine tunnels. Also a need for a separate loading position and a use position of the receptacle 5 and/or the cement silo 2 can be avoided, which also supports feeding cement also during a use phase of the mining machine 1.

A feed apparatus 3 may be arrangeable in at least two alternative positions with respect to the mining machine 1, such as in a first position comprising a tramming position and a second position comprising a use position. Figure 1 shows an embodiment of such a feed apparatus 3 shown in first position and Figure 2 shows in a second position. The position of the receptacle 5 relative to a frame part 7 of the mining machine 1 in the tramming position may be closer to the midpoint of the mining machine 1 than in the use position in at least a vertical direction or a horizontal direction to optimise the overall dimensions of the mining machine. The position of the receptacle 5 relative to the frame part 7 of the mining machine 1 in the use position may similarly be located further away from the midpoint of the mining machine 1 than in the tramming position in at least a vertical direction or a horizontal direction to optimise the ease of feeding cement to the receptacle 5. According to an embodiment, the receptacle 5 may be provided in a use position lower and more to the side from the longitudinal centre line of the mining machine 1, whereby the receptacle 5 is easily available for feeding cement. In a tramming position with the receptacle 5 provided closer to the longitudinal centre line and higher up from the mine floor the mining machine 1 may require less space when tramming in the tunnels and the receptacle 5 is less exposed to impacts.

According to an embodiment, the feed apparatus 3 may further comprise lifting means (not shown) for moving at least the first end 6a of the transfer tube 6 relative to the frame part 7 of the mining machine 1 and thereby moving the feed apparatus 3 between the use position and the tramming position. According to an embodiment, the use position and the tramming position may comprise a use position and a tramming position as described above. According to an embodiment, the lifting means may comprise at least a pressure medium cylinder. Principles of such pressure medium cylinders are known as such and, thus, they are not explained in more detail.

According to an embodiment, the receptacle 5 is arranged in the vicinity of the back end 8 side of the mining machine 1. In other words, the receptacle 5 is arranged closer to the back end 8 of the mining machine 1, the back end 8 referring to the end of the mining machine 1 opposite to the end comprising means for providing grouting concrete.

A cement silo 2 according to the current solution may comprise a cover section 9 at the upper end of the cement silo 2 and at the cover section 9 a connecting part 10 shaped to be connected and sealed to a feed apparatus described in this description in a substantially dustproof manner. According to an embodiment, the transfer tube 3 may be connected and sealed to the connecting part 10 of the cover section 9. If the transfer tube 3 comprises a connector part 6c, the connector part 6c of the transfer tube 3 and the connecting part 10 of the cover section 9 of the cover section 9 of the cement silo 2 may be connected and sealed to one another. The sealing is not necessary in all circumstances, but it further decreases presence of dust in the air and, thus, improves the working conditions.

A method for supplying cement to a cement silo 2 attached to a mining machine 1 may comprise receiving 310 cement in a receptacle 5 of a feed apparatus 3. The method may further comprise transferring 320 the cement from the receptacle to the cement silo within a transfer tube connected at a first end to the receptacle and connected at a second end of the transfer tube to the cement silo by transfer means arranged in connection with the transfer tube, and feeding 330 the cement to the cement silo. The transfer tube 6 may comprise at least one transfer tube section comprising a tube-like inner space for cement to be transferred. Any feed apparatus 3 and/or a part thereof described in this description may be used in connection with the method.

According to an embodiment, the receptacle 5 may be provided at the back end 8 side of the mining machine 1 at least in a use position of the feed apparatus. The feed apparatus may be arranged in the use position of the feed apparatus 3 at least during a use phase of the mining machine 1, the use phase referring to a phase during operation of the mining machine 1. This use phase may comprise at least a phase during which cement is applied to the receptacle 5 of the feed apparatus 3. According to an embodiment, cement is supplied to the cement silo 2 during use of the mining machine 1. In other words, cement is supplied to the cement silo 2 simultaneously to providing grouting concrete to holes, splits and/or other cavities of a rock, for example. The use phase may, thus, also comprise providing grouting concrete to a rock.

According to an embodiment, the cement silo 2 comprises a sensor (not shown) for detecting the fill-level of the cement silo 2. The method for supplying cement to a cement silo 2 attached to a mining machine 1 may further comprise sensing the fill-level of the cement silo 2 and controlling automatically the transfer means of the feed apparatus 3, such that the volume of the cement fed by the transfer means is lowered or the function of the transfer means is stopped when a predetermined upper control limit of the fill-level of the cement silo 2 is exceeded and the volume of the cement fed by the transfer means is increased or the function of the transfer means is started when the fill-level of the cement silo 2 has fallen below a predetermined lower control limit. According to a further embodiment, the method may comprise sensing the fill-level of the cement silo 2 and giving a warning for an operator of the mining machine 1 when a predetermined upper control limit of the fill-level of the cement silo or a predetermined lower control limit of the fill-level of the cement silo controlling has been reached.

It will be obvious to a person skilled in the art that, as the technology advances, the inventive concept can be implemented in various ways. The invention and its embodiments are not limited to the examples described above but may vary within the scope of the claims.

## Claims

1. A mining machine comprising a feed apparatus (3) for feeding cement to a cement silo (2) of a mining machine (1), wherein the feed apparatus (3) comprises:
a receptacle (5) for receiving cement,
a transfer tube (6) connected at a first end (6a) to the receptacle (5) and at a second end (6b) to the cement silo (2) for guiding the cement from the receptacle to the cement silo (2), the transfer tube comprising at least one transfer tube section comprising a tube-like inner space for cement to be transferred, and
transfer means (12) arranged in connection with the transfer tube (6) and arranged to move cement within the transfer tube from the receptacle (5) to the cement silo (2).

2. A mining machine according to claim 1, wherein the receptacle (5) comprises a scoop-like container, wherein an opening is arranged at the top of the receptacle for receiving cement.

3. A mining machine according to claim 1 or 2, wherein the transfer tube (6) comprises a transfer tube section and a connector part (6c) for connecting the transfer tube to the cement silo (2).

4. A mining machine as claimed in any one of claims 1 to 3, wherein the transfer tube (6) comprises at least two transfer tube sections arranged at an angle with respect to one another.

5. A mining machine as claimed in any one of claims 1 to 5, wherein at least a part of a transfer tube section is formed as flexible at least in the transverse direction of the transfer tube section by the transfer tube section comprising a flexible material and/or a flexible structure.

6. A mining machine as claimed in any one of claims 1 to 5, wherein the transfer means (12) comprise a screw conveyor.

7. A mining machine as claimed in any one of claims 1 to 6, wherein the transfer means (12) comprise an ejector.

8. A mining machine as claimed in any one of claims 1 to 7, wherein the feed apparatus (3) can be arranged in at least two alternative positions with respect to the mining machine (1),
wherein a first position comprises a tramming position and a second position comprises a use position,
wherein the position of the receptacle (5) relative to a frame part (7) of the mining machine (1) in the tramming position is closer to the midpoint of the mining machine (1) than in the use position in at least a vertical direction or a horizontal direction to optimise the overall dimensions of the mining machine, and
wherein the position of the receptacle (5) relative to the frame part (7) of the mining machine in the use position is further away from the midpoint of the mining machine (1) than in the tramming position in at least a vertical direction or a horizontal direction to optimise the ease of feeding cement to the receptacle.

9. A mining machine as claimed in any one of claims 1 to 8, wherein the receptacle (5) is arranged at the vicinity of the back end side (8) of the mining machine (1).

10. A mining machine as claimed in any one of claims 1 to 8, wherein the cement silo comprises a cover section at the upper end of the cement silo, wherein the cement silo (2) comprises at the cover section (9) a connecting part (10) shaped to be connected and sealed to the feed apparatus (3) in a dustproof manner.

11. A method for supplying cement to a cement silo (2) attached to a mining machine (1), comprising the method steps of receiving (310) cement in a receptacle (5) of a feed apparatus (3),
transferring (320) the cement from the receptacle to the cement silo within a transfer tube (6) connected at a first end (6a) to the receptacle and connected at a second end (6b) of the transfer tube to the cement silo (2) by transfer means (12) arranged in connection with the transfer tube, the transfer tube comprising at least one transfer tube section comprising a tube-like inner space for cement to be transferred, and
feeding (330) the cement to the cement silo (2).

12. A method according to claim 11, wherein the receptacle (5) is provided at the back end side (8) of the mining machine (1) at least in a use position of the feed apparatus (3).

13. A method according to claim 11 or claim 12, wherein cement is supplied to the cement silo (2) during use of the mining machine (1).

14. A method according to any one of claims 11 to 13, wherein the cement silo (2) comprises a sensor for detecting the fill-level of the cement silo, wherein the method further comprises
sensing the fill-level of the cement silo and
controlling automatically the transfer means (12) of the feed apparatus (3), such that the volume of the cement fed by the transfer means is lowered or the function of the transfer means is stopped when a predetermined upper control limit of the fill-level of the cement silo is exceeded and the volume of the cement fed by the transfer means is increased or the function of the transfer means is started when the fill-level of the cement silo has fallen below a predetermined lower control limit.

15. A method according to any one of claims 11 to 13, wherein the cement silo (2) comprises a sensor for detecting the fill-level of the cement silo, wherein the method further comprises
sensing the fill-level of the cement silo and
giving a warning for an operator of the mining machine when a predetermined upper control limit of the fill-level of the cement silo or a predetermined lower control limit of the fill-level of the cement silo controlling has been reached.

## Patentansprüche

1. Bergbaumaschine, die eine Zuführvorrichtung (3) zum Zuführen von Zement zu einem Zementsilo (2) einer Bergbaumaschine (1) umfasst, wobei die Zuführvorrichtung (3) umfasst:
einen Aufnahmebehälter (5) zum Aufnehmen von Zement,
ein Übertragungsrohr (6), das an einem ersten Ende (6a) mit dem Aufnahmebehälter (5) und an einem zweiten Ende (6b) mit dem Zementsilo (2) verbunden ist, um den Zement vom Aufnahmebehälter zum Zementsilo (2) zu führen, wobei das Übertragungsrohr mindestens einen Übertragungsrohrabschnitt umfasst, der einen rohrartigen Innenraum für zu übertragenen Zement umfasst, und
Übertragungsmittel (12), das in Verbindung mit dem Übertragungsrohr (6) angeordnet ist und angeordnet ist, um Zement innerhalb des Übertragungsrohrs von dem Aufnahmebehälter (5) zu dem Zementsilo (2) zu bewegen.

2. Bergbaumaschine nach Anspruch 1, wobei der Aufnahmebehälter (5) einen schaufelartigen Behälter umfasst, wobei eine Öffnung an der Oberseite des Aufnahmebehälters zur Aufnahme von Zement angeordnet ist.

3. Bergbaumaschine nach Anspruch 1 oder 2, wobei das Übertragungsrohr (6) einen Übertragungsrohrabschnitt und ein Verbindungsteil (6c) zum Verbinden des Übertragungsrohrs mit dem Zementsilo (2) umfasst.

4. Bergbaumaschine nach einem der Ansprüche 1 bis 3, wobei das Übertragungsrohr (6) mindestens zwei Übertragungsrohrabschnitte umfasst, die in einem Winkel in Bezug aufeinander angeordnet sind.

5. Bergbaumaschine nach einem der Ansprüche 1 bis 5, wobei mindestens ein Teil eines Übertragungsrohrabschnitts mindestens in der Querrichtung des Übertragungsrohrabschnitts flexibel ausgebildet ist, indem der Übertragungsrohrabschnitt ein flexibles Material und/oder oder eine flexible Struktur umfasst.

6. Bergbaumaschine nach einem der Ansprüche 1 bis 5,wobei das Übertragungsmittel (12) einen Schneckenförderer umfasst.

7. Bergbaumaschine nach einem der Ansprüche 1 bis 6, wobei das Übertragungsmittel (12) einen Auswerfer umfasst.

8. Bergbaumaschine nach einem der Ansprüche 1 bis 7, wobei die Zuführvorrichtung (3) in mindestens zwei alternativen Positionen in Bezug auf die Bergbaumaschine (1) angeordnet werden kann,
wobei eine erste Position eine Schleppfördererposition und eine zweite Position eine Gebrauchsposition umfasst,
wobei die Position des Behälters (5) in Bezug auf ein Rahmenteil (7) der Bergbaumaschine (1) in der Schleppfördererposition näher am Mittelpunkt der Bergbaumaschine (1) liegt als in der Gebrauchsposition in mindestens einer vertikalen Richtung oder einer horizontalen Richtung, um die Gesamtabmessungen der Bergbaumaschine zu optimieren, und
wobei die Position des Aufnahmebehälters (5) in Bezug auf das Rahmenteil (7) der Bergbaumaschine in der Gebrauchsposition weiter vom Mittelpunkt der Bergbaumaschine (1) entfernt ist als in der Schleppfördererposition in mindestens einer vertikalen Richtung oder einer horizontalen Richtung, um den besseren Zugang der Zufuhr von Zement zum Aufnahmebehälter zu optimieren.

9. Bergbaumaschine nach einem der Ansprüche 1 bis 8, wobei der Aufnahmebehälter (5) in der Nachbarschaft der hinteren Endseite (8) der Bergbaumaschine (1) angeordnet ist.

10. Bergbaumaschine nach einem der Ansprüche 1 bis 8, wobei das Zementsilo einen Abdeckabschnitt am oberen Ende des Zementsilos umfasst, wobei das Zementsilo (2) am Abdeckabschnitt (9) ein Verbindungsteil (10) umfasst, das geformt ist, um mit der Zuführvorrichtung (3) staubdicht verbunden und abgedichtet zu sein.

11. Verfahren zum Zuführen von Zement zu einem Zementsilo (2), das an einer Bergbaumaschine (1) angebracht ist, umfassend die Verfahrensschritte
des Aufnehmens (310) von Zement in einem Aufnahmebehälter (5) einer Zuführvorrichtung (3),
des Übertragens (320) des Zements von dem Aufnahmebehälter zu dem Zementsilo innerhalb eines Übertragungsrohrs (6), das an einem ersten Ende (6a) mit dem Aufnahmebehälter verbunden ist und an einem zweiten Ende (6b) des Übertragungsrohrs mit dem Zementsilo (2) durch Übertragungsmittel (12) verbunden ist, das in Verbindung mit dem Übertragungsrohr angeordnet ist, wobei das Übergaberohr mindestens einen Übertragungsrohrabschnitt umfasst, der einen rohrartigen Innenraum für den zu übertragenen Zement umfasst, und
des Zuführens (330) des Zements zu dem Zementsilo (2).

12. Verfahren nach Anspruch 11, wobei der Aufnahmebehälter (5) an der hinteren Endseite (8) der Bergbaumaschine (1) mindestens in einer Gebrauchsposition der Zuführvorrichtung (3) bereitgestellt ist.

13. Verfahren nach Anspruch 11 oder 12, wobei dem Zementsilo (2) während der Verwendung der Bergbaumaschine (1) Zement zugeführt wird.

14. Verfahren nach einem der Ansprüche 11 bis 13, wobei das Zementsilo (2) einen Sensor zum Erfassen des Füllstands des Zementsilos umfasst, wobei das Verfahren weiter umfasst
Erfassen des Füllstands des Zementsilos und
automatisches Steuern des Übertragungsmittels (12) der Zuführvorrichtung (3), sodass das Volumen des Zements, der durch das Übertragungsmittel zugeführt wird, verringert wird, oder die Funktion des Übertragungsmittels gestoppt wird, wenn ein vorbestimmter oberer Steuergrenzwert des Füllstands des Zementsilos überschritten wird und das Volumen des Zements, der durch das Übertragungsmittel zugeführt wird, erhöht wird, oder die Funktion des Übertragungsmittels gestartet wird, wenn der Füllstand des Zementsilos unter einen vorbestimmten unteren Steuergrenzwert gefallen ist.

15. Verfahren nach einem der Ansprüche 11 bis 13, wobei das Zementsilo (2) einen Sensor zum Erfassen des Füllstands des Zementsilos umfasst, wobei das Verfahren weiter umfasst
Erfassen des Füllstands des Zementsilos und
Ausgeben einer Warnung an einen Bediener der Bergbaumaschine, wenn ein vorbestimmter oberer Steuergrenzwert des Füllstands des Zementsilos oder ein vorbestimmter unterer Steuergrenzwert des Füllstands der Zementsilossteuerung erreicht wurde.

## Revendications

1. Machine de mine comprenant un appareil d'alimentation (3) pour l'alimentation en ciment d'un silo à ciment (2) d'une machine de mine (1), dans laquelle l'appareil d'alimentation (3) comprend :
un réceptacle (5) pour la réception de ciment,
un tube de transfert (6) raccordé à une première extrémité (6a) au réceptacle (5) et à une seconde extrémité (6b) au silo à ciment (2) pour le guidage du ciment du réceptacle au silo à ciment (2), le tube de transfert comprenant au moins une section de tube de transfert comprenant un espace intérieur tubulaire pour le ciment à transférer, et
des moyens de transfert (12) agencés en connexion avec le tube de transfert (6) et agencés pour déplacer le ciment dans le tube de transfert du réceptacle (5) au silo à ciment (2).

2. Machine de mine selon la revendication 1, dans laquelle le réceptacle (5) comprend un contenant de type pelle, dans laquelle une ouverture est agencée sur le dessus du réceptacle pour la réception de ciment.

3. Machine de mine selon la revendication 1 ou 2, dans laquelle le tube de transfert (6) comprend une section de tube de transfert et une partie de connecteur (6c) pour la connexion du tube de transfert au silo à ciment (2).

4. Machine de mine selon l'une quelconque des revendications 1 à 3, dans laquelle le tube de transfert (6) comprend au moins deux sections de tube de transfert agencées selon un angle l'une par rapport à l'autre.

5. Machine de mine selon l'une quelconque des revendications 1 à 5, dans laquelle au moins une partie d'une section de tube de transfert est formée de manière flexible au moins dans la direction transversale de la section de tube de transfert par la section de tube de transfert comprenant un matériau flexible et/ou une structure flexible.

6. Machine de mine selon l'une quelconque des revendications 1 à 5, dans laquelle les moyens de transfert (12) comprennent un convoyeur à vis.

7. Machine de mine selon l'une quelconque des revendications 1 à 6, dans laquelle les moyens de transfert (12) comprennent un éjecteur.

8. Machine de mine selon l'une quelconque des revendications 1 à 7, dans laquelle l'appareil d'alimentation (3) peut être agencé dans au moins deux positions alternatives par rapport à la machine de mine (1),
dans laquelle une première position comprend une position de herchage et une seconde position comprend une position d'utilisation,
dans laquelle la position du réceptacle (5) par rapport à une partie de cadre (7) de la machine de mine (1) dans la position de herchage est plus près du point médian de la machine de mine (1) que dans la position d'utilisation dans au moins une direction verticale ou une direction horizontale pour optimiser les dimensions globales de la machine de mine, et
dans laquelle la position du réceptacle (5) par rapport à la partie de cadre (7) de la machine de mine dans la position d'utilisation est plus loin du point médian de la machine de mine (1) que dans la position de herchage dans au moins une direction verticale ou une direction horizontale pour optimiser la facilité d'alimentation de ciment au réceptacle.

9. Machine de mine selon l'une quelconque des revendications 1 à 8, dans laquelle le réceptacle (5) est agencé à proximité du côté d'extrémité arrière (8) de la machine de mine (1).

10. Machine de mine selon l'une quelconque des revendications 1 à 8, dans laquelle le silo à ciment comprend une section de couvercle à l'extrémité supérieure du silo à ciment, dans laquelle le silo à ciment (2) comprend sur la section de couvercle (9) une partie de raccordement (10) formée pour être raccordée et scellée à l'appareil d'alimentation (3) de manière étanche à la poussière.

11. Procédé d'alimentation en ciment d'un silo à ciment (2) attaché à une machine de mine (1), comprenant les étapes de procédé de
la réception (310) d'un ciment dans un réceptacle (5) d'un appareil d'alimentation (3),
le transfert (320) du ciment du réceptacle au silo à ciment dans un tube de transfert (6) raccordé à une première extrémité (6a) au réceptacle et raccordé à une seconde extrémité (6b) du tube de transfert au silo à ciment (2) par des moyens de transfert (12) agencés en connexion avec le tube de transfert, le tube de transfert comprenant au moins une section de tube de transfert comprenant un espace intérieur tubulaire pour le ciment à transférer, et
l'alimentation (330) du ciment au silo à ciment (2).

12. Procédé selon la revendication 11, dans lequel le réceptacle (5) est prévu sur le côté d'extrémité arrière (8) de la machine de mine (1) au moins dans une position d'utilisation de l'appareil d'alimentation (3).

13. Procédé selon la revendication 11 ou la revendication 12, dans lequel du ciment est fourni au silo à ciment (2) pendant l'utilisation de la machine de mine (1).

14. Procédé selon l'une quelconque des revendications 11 à 13, dans lequel le silo à ciment (2) comprend un capteur pour la détection du niveau de remplissage du silo à ciment, dans lequel le procédé comprend en outre
la détection du niveau de remplissage du silo à ciment et
la commande automatique des moyens de transfert (12) de l'appareil d'alimentation (3) de sorte que le volume du ciment alimenté par les moyens de transfert soit abaissé ou la fonction des moyens de transfert soit arrêtée lorsqu'une limite de commande supérieure prédéterminée du niveau de remplissage du silo à ciment est excédée et le volume du ciment alimenté par les moyens de transfert soit augmenté ou la fonction des moyens de transfert soit démarrée lorsque le niveau de remplissage du silo à ciment est tombé sous une limite de commande inférieure prédéterminée.

15. Procédé selon l'une quelconque des revendications 11 à 13, dans lequel le silo à ciment (2) comprend un capteur pour la détection du niveau de remplissage du silo à ciment, dans lequel le procédé comprend en outre
la détection du niveau de remplissage du silo à ciment et
la mise en garde pour un opérateur de la machine de mine lorsqu'une limite de commande supérieure prédéterminée du niveau de remplissage du silo à ciment ou une limite de commande inférieure prédéterminée du niveau de remplissage du silo à ciment en commande a été atteinte.
